# EUROPEAN PATENT SPECIFICATION

(11) **EP 1 150 439 B1**
(45) Date of publication and mention of the grant of the patent: **27.09.2006**
(21) Application number: 00201474.4
(22) Date of filing: 25.04.2000
(51) Int. Cl.: H04B 7/08

(54) **Antenna diversity receiver**
Empfänger mit Antennendiversity
Récepteur avec diversité d'antenne

(43) Date of publication of application: 31.10.2001
(73) Proprietor: SIEMENS AKTIENGESELLSCHAFT, 80333 München (DE)
(72) Inventor: Meijer, Pieter, 5616 CK Eindhoven (NL)

(56) References cited:
- EP-A- 0 274 157
- US-A- 5 379 449
- US-A- 5 742 896

## Description

The invention relates to an antenna diversity receiver comprising antenna selective switching means for selecting and coupling one of a plurality of antennas to an RF receiver input, as well as a multipath detector to activate said antenna selective switching means to change over to another antenna at the occurrence of multipath interferences in the RF reception signal of said one antenna and switching disabling means automatically disabling the antenna selective switching means to change antennas during a disabling period following each such change over. Such a receiver may use Philips' IC TEA 6101 and is described in Philips' application datasheets of this IC.

The reception of a wanted RF broadcast transmitter signal may be disturbed or otherwise deteriorated by various phenomena, such as multipath reception and/or adjacent channel interferences. In general, multipath reception is caused by signal reflections at and/or against environmental physical obstacles, such as mountains, trees, buildings, fences and the like. Due to such signal reflections an RF broadcast signal may arrive at a certain reception location through various different signal paths, i.e. in various different amplitude and phase conditions. The summation of these multipath signals at the antenna of the receiver results in unpredictable signal amplitude and/or phase distorsions, most often effectuating in part or complete cancellation of the useful RF reception signal. These signal cancellations, hereinafter also being referred to as signal dips, strongly depend on the RF carrier frequency of the received RF broadcasting signal and on the location of reception.

Said signal dips severely deteriorate the wanted RF broadcasting signal and therewith also the overall signal reception quality. However, a relatively small shift in the position of the antenna could already suffice to strongly improve said signal reception quality. This solution is used in socalled antenna diversity receivers to avoid reception of multipath distorted RF signals in particular with mobile FM receivers. Such antenna diversity receivers are provided with two or more mutually apart placed antennas being coupled to an RF input of a receiver. Only that antenna is actually connected to the RF receiver input, having best local receiving conditions with respect to the other antenna(s). This antenna, hereinafter also being referred to as actual antenna, will be effective in the reception and supply of the wanted RF broadcasting signal to the receiver as long as the multipath distortion at this actual antenna remains smaller than a certain predetermined multipath threshold level. As soon as the received multipath distortion exceeds said certain predetermined multipath threshold level, a change over in the RF signal supply to the receiver from this actual antenna to another antenna being then positioned at a location with better receiving conditions, is initiated. The receiver is therewith continuously optimised for minimum multipath reception. US 5 742 896 discloses such a receiver.

However, inherent to the antenna diversity feature are the short interruptions in the RF signal supply to the receiver during such antenna change over or switching action. Due to the delay between the occurrence of an actual multipath caused signal dip and the detection thereof, said RF signal interruptions may be detected as being caused by multipath effects, and may therewith initiate a subsequent false antenna switching action. Such false antenna switching action may in its turn be detected as a multipath originated signal dip again, initiating a further false antenna switching action, and so on and so forth, with a kind of oscillating effect as a result. To reduce the risk of oscillating antenna switching actions, the above known antenna diversity receivers using Philips' IC TEA 6101 are provided with switching disabling means automatically disabling the antenna selective switching means to change antennas over a certain predetermined fixed disabling period following each such change over or switching action following a preceding switching action within a certain predetermined fixed time period.

This known measure however, is not effective in receivers with dynamic IF selectivity, such as receivers with adjacent channel suppression. As mentioned above, adjacent channel interferences are another important source of signal distorsion and are usually caused by FM radio broadcast signals modulated on a carrier positioned in frequency adjacent to the carrier frequency of a wanted FM radio broadcast signal. Due to e.g. peak values in the FM modulation signal, these adjacent channel FM radio signals may temporarily exceed the allocated channel bandwidth therewith breaking through into the frequency range of said wanted FM radio broadcast signal. In receiver with adjacent channel suppression such adjacent channel interferences are being suppressed by varying the bandwidth of the variable bandwidth intermediate frequency (IF) selective means - hereinafter also being referred to as IF bandwidth - dependent on the deviation of the adjacent channel signal within the frequency range of the wanted FM radio broadcast signal. The larger said deviation, the smaller the bandwidth of the variable bandwidth intermediate frequency (IF) selective means. The so dynamically varying IF selectivity therewith effectuates a suppression of the adjacent channel interferences.

It is an object of the invention to combine in a receiver the benefits of the antenna diversity feature with those of the dynamic IF selectivity feature while preventing unwanted effects to occur.

It is another object of the invention to maximize the area in which the antenna diversity feature is operative, without giving rise to switching oscillating effects.

An antenna diversity receiver comprising antenna selective switching means for selecting and coupling one of a plurality of antennas to an RF receiver input, as well as a multipath detector to activate said antenna selective switching means to change over to another antenna at the occurrence of multipath interferences in the RF reception signal of said one antenna and switching disabling means automatically disabling the antenna selective switching means to change antennas during a disabling period following each such change over according to the invention is therefore characterised by an adjacent channel detector controlling said disabling period to increase with increasing adjacent channel interferences and vice versa.

The invention is based on the recognition that in an antenna diversity receiver the delay between the actual occurrence of a multipath caused signal dip and the detection thereof is determined by the receiver's IF selectivity. In a receiver with dynamic IF selectivity, the IF bandwidth is variable, therewith causing said delay to vary too: the smaller the IF bandwidth the longer the delay and vice versa. However, the longer the delay, the longer the time period between the switching actions should be to avoid the risk of oscillating false antenna switching actions. The invention, not only combines the features of antenna diversity and dynamic IF selectivity, while preventing antenna switching actions from oscillating, it also allows to accurately define when to disable such antenna switching actions. According to the invention, the disabling period is dynamically varied with the delay between the actual occurrence of a multipath caused signal interference and the detection thereof, i.e. with the IF bandwidth. This is in contrast to the above referenced known receiver using a fixed disabling period, during which switching actions are disabled irrespective the actual delay, i.e. the actual IF bandwidth. This may give rise to unnecessary disabling of antenna switching actions, in particular occurring at greater IF bandwidth. By applying the above measure according to the invention, such unnecessary disabling of antenna switching actions can be prevented therewith allowing to maximize the area in which the antenna diversity feature is operative, without giving rise to switching oscillating effects.

To come to a reliable implementation, such antenna diversity receiver is preferably characterised by said adjacent channel detector being coupled to a control terminal of a variable timer circuit defining said disabling period.

Such variable timer circuit may comprise a digital counter having a variable counting cycle.

The detection of switching actions may preferably be implemented by antenna switching detection means comprising signal level detection means and an OR gate coupled between said plurality of antennas and the switching disabling means.

A cost-effective embodiment of the invention is characterised by said OR gate means comprising per each pair of antennas included in said plurality of antennas an exclusive OR gate, the antennas within each such pair being coupled through said signal level detection means to first and second input terminals of the exclusive OR gate, directly, respectively via a delay element, an output of each exclusive OR gates being coupled to an input of a non-exclusive OR gate, an output thereof being coupled to the switching disabling means.

A further cost reduction is obtained with a delay element comprising an RC member having a serial resistor and a mass connected capacitor, the joint connection of the resistor and the capacitor being coupled to the respectively connected to said signal level detection means by respectively, the signal level detection means being coupled to the second input terminal of said exclusive OR gate.

To accurately match the control range of the variable timer circuit to the control range of the IF bandwidth the above antenna diversity receiver according to the invention is characterised by a threshold circuit being coupled between an output of the adjacent channel detector and a control input of the switching disabling means for comparing the output signal of the adjacent channel detector with a threshold value limiting the control range of the variable timer circuit at a predetermined value.

This measure also allows for combining the antenna disabling feature based on a fixed disabling period used in the known receiver with the one according to the invention

The adjacent channel detector may well be used not only for the above antenna disabling feature according to the invention, but also for controlling the bandwidth of a variable bandwidth intermediate frequency (IF) selectivity to decrease in bandwidth with increasing adjacent channel interferences and vice versa, therewith realising the feature of dynamic selectivity or adjacent channel suppression.

In yet another preferred embodiment, the plurality of antennas comprises an antenna for receiving radio broadcast RF signals as well as an antenna for receiving telecommunication RF signals.

These and further aspects and advantages of the invention will be discussed more in detail hereinafter with reference to the disclosure of preferred embodiments, and in particular with reference to the appended Figures, in which:
Figure 1 shows a preferred embodiment of a receiver according to the invention.
Figure 2 shows a preferred embodiment of antenna switching detection means for use in the receiver of Figure 1.

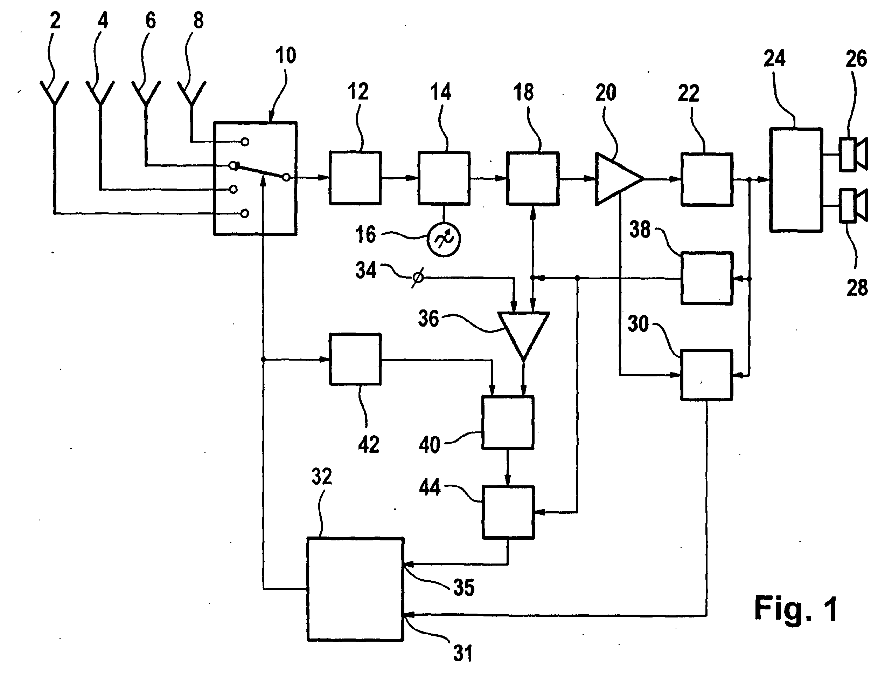

Figure 1 shows an antenna diversity FM receiver according to the invention comprising first to fourth antennas 2, 4, 6, 8 coupled through antenna selective switching means 10 to an RF receiver input circuit 12, subsequently followed by a mixer device 14 being supplied with a tunable local oscillator signal from an oscillator circuit 16, variable bandwidth intermediate frequency (IF) selective means 18 - hereinafter also being referred to as selective IF circuit -, an IF amplifier 20, an FM demodulator 22 and baseband modulation signal processing means 24 being coupled to stereo left and stereo right signal reproducing means 26, respectively 27.

The signal processing in the antenna diversity receiver described sofar is on itself known: an RF broadcasting signal received at one of the first to fourth antennas 2, 4, 6, 8 - in the embodiment shown: the third antenna 6 (hereinafter also referred to as actual antenna) - is supplied via the antenna selective switching means 10 and an RF receiver input terminal to the RF receiver input circuit 12 for a broadband selection and amplification thereof. The output signal of the RF receiver input circuit 12 is thereafter mixed in the mixer device 14 with the tunable local oscillator signal for a first demodulation of a wanted RF broadcast signal into an intermediate frequency (IF) signal. This IF signal is filtered in the selective IF circuit 18, subsequently amplified in the IF amplifier 20 and demodulated in the FM demodulator 22 into a baseband modulation signal comprising a stereo multiplex (MPX) signal. The MPX signal is further processed in the processing means 24 to obtain stereo left and stereo right signals to be converted into acoustic signals in said stereo left and stereo right signal reproducing means 26, respectively 27.

The antenna diversity receiver also comprises a multipath detector 30 for a detection of multipath distorsion in the received RF signal. The detection of multipath distorsion is based on two criteria: the occurrence of a (fast) amplitude dip in the level of the IF signal ànd the occurrence of distortion components occurring within the frequency range of the baseband modulation signal above the frequency spectrum of the MPX signal. First and second input terminals of the multipath detector 30 are therefore coupled respectively to an output of the selective IF circuit 18 and to an output of the FM demodulator 22. If an IF signal dip is detected to occur simultaneously with distortion components within the frequency range of the baseband modulation signal, then the multipath detector 30 supplies a switching control signal to a switching control signal input terminal 31 of an antenna switching control device 32. This causes the antenna selective switching means 10 to change over reception from antenna 6 being the actual antenna up to this switching action, to another antenna, having better receiving conditions than the antenna 6, e.g. antenna 8 (the connection to the RF receiver input circuit 12 not being shown). The next detection of a multipath caused signal dip, will initiate in same manner again a subsequent antenna switching action. In a practical embodiment of the receiver Philips' IC TEA 6101 may be used to implement the functionalities of the multipath detector 30 and the antenna switching control device 32. The antenna switching control device 32 integrated in this IC comprises switching disabling means (not shown) preventing any antenna switching action from being followed by a subsequent antenna switching action within a fixed time period of 20 usec., hereinafter referred to as fixed switching disabling periods. The antenna switching disabling means comprises a counter device, which is set to start counting monotonously up or down at the occurrence of each switching control signal and stops counting after said fixed time period of 20 usec, providing immunity from switching control signals during counting. This prevents switching actions during these fixed switching disabling periods from occurring. In practise a fixed antenna switching disabling time period of 20 usec corresponds with a delay effectuated at a bandwidth of the IF selectivity 18 substantially within the range between 40 and 50 KHz dependent of the steepness of the selectivity used.

The antenna diversity receiver is provided with an adjacent channel detector 38 functioning as bandwidth control means, having an input being coupled an output of the FM demodulator 22. An output of the adjacent channel detector 38 provides a DC control voltage to a bandwidth control input of the selective IF circuit 18 for varying the bandwidth thereof dependent on adjacent channel interferences, such that the bandwidth of the selective IF circuit 18 is smaller, the more the adjacent channel signal is overlapping or threspassing the frequency area of the wanted RF signal. The interferences caused by such adjacent channel signal are therewith reduced. For a more detailed description of the functioning of the adjacent channel feature in suppressing adjacent channel interferences, reference is made to US patent 4 907 293.

In addition to the fixed switching disabling periods the receiver according to the invention is also provided with an immunity from switching control signals during a switching disabling period following each antenna switching action, which increases when the bandwidth of the selective IF circuit 18 decreases and vice versa. For this, the DC control output voltage of the adjacent channel detector 38 controlling the bandwidth of the selective IF circuit 18, which provides a reliable measure for said bandwidth, is also used to control the switching disabling period as mentioned above. The switching disabling period therewith varies with the above signal delay in the receiver: the longer said delay, the longer the switching disabling period and vice versa. By choosing the switching disabling period just a little longer than the receiver signal delay, oscillating antenna switching actions can be reliably avoided under any circumstance of multipath distortion and/or adjacent channel interference, also under reception conditions at which the IF-bandwidth may become very narrow. The extra period over which the switching disabling period should be longer than the receiver signal delay, can be in the order of some useconds. In this way it is possible to guarantee that the switching disabling period is never larger than strictly necessary to avoid antenna switching actions from oscillating.

Therefore, the receiver shown comprises a threshold circuit 36 being coupled between an output of the adjacent channel detector 38 and a control input 35 of the antenna switching control device 32 via an AND gate 40 and a variable timer circuit 44. In the threshold circuit 36 the output DC voltage signal of the adjacent channel detector 38 is compared with a threshold value Vth supplied to terminal 34 of the threshold circuit 36. The threshold value Vth is chosen to correspond to the IF-bandwidth at which the filter delay becomes larger than the fixed switching disabling period of 20 usec. An output of the threshold circuit 36 is coupled to a first input of the AND gate 40, whereas an output of the antenna switching control device 32 is coupled via antenna switching detection means 42 to a second input of the AND gate 40.
The AND gate 40 provides a trigger signal to the variable timer circuit 44, when both the DC-control output voltage of the adjacent channel detector 38 exceeds Vth and an antenna switching action is being detected by the antenna switching detection means 42.
The DC-control output voltage of the adjacent channel detector 38 is also supplied to a control terminal of the the variable timer circuit 44 to vary the time base thereof, such that it increases with decreasing IF bandwidth and vice vera. In a practical implementation, the variable timer circuit 44 comprises a digital counter device having a variable counting cycle. An output of the variable timer circuit 44 is coupled to a disabling input 35 of the antenna switching control device 32 to disable any antenna switching action during the counting process. The disabling period may be substantially some (e.g. 2) µ seconds longer than the delay caused by the IF selectivity 18. As mentioned above, when using Philips "Antenna Diversity" IC TEA6101, this dynamically varying antenna switching disabling period comes in addition to the fixed antenna switching disabling period already present in the IC.

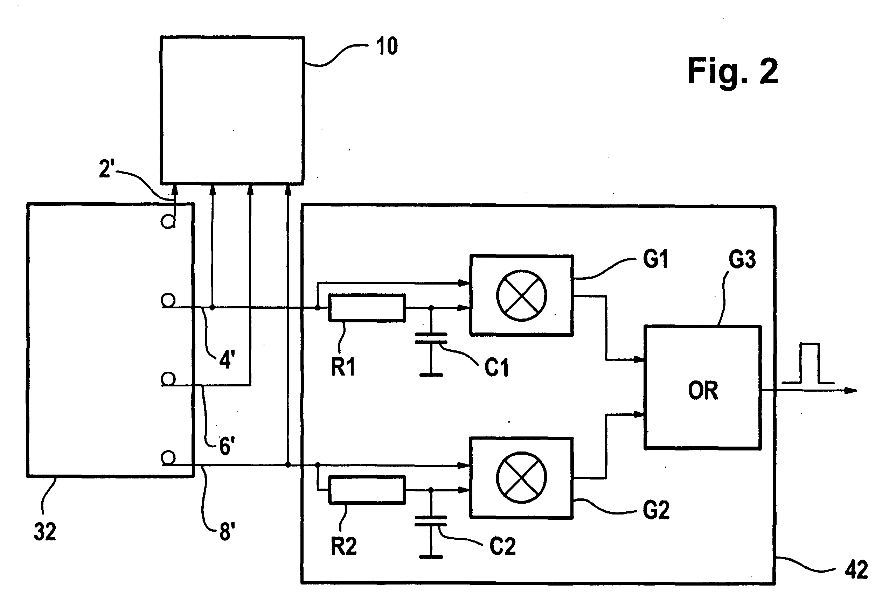

Figure 2 shows a preferred embodiment of the antenna switching detection means 42 for use in combination with the antenna switching control device 32 as implemented in the above Philips' IC TEA6101. This IC is provided with 4 pin connectors 2', 4', 6', 8', only one of these having a high output voltage or digital "1" value, when the corresponding antenna 2, 4, 6 or 8 is the actual reception antenna, i.e. is coupled via the antenna selective switching means 10 to the RF receiver input circuit 12. The pin connectors 4' and 8' are coupled to exclusive OR gates G1 and G2, respectively, directly as well as through delay elements R1C1 and R2C2, respectively. Outputs of the exclusive OR gates G1 and G2 are coupled to inputs of a non-exclusive OR gate G3, which is connected to the above mentioned second input of the AND gate 40.
The delay elements R1C1 and R2C2 each comprise an RC circuit delaying the supply of the digital value supplied at the pin connectors 4' and 8' over an RC time constant to one of the inputs of the respective exclusive OR gates G1 and G2. This means that a high or digital "1" value arising at e.g. pin connector 4' will immediately be supplied to the one input of the exclusive OR gate G1 and some time later at the other input of said exclusive OR gate G1. This results in a pulse shaped signal at the output of said exclusive OR gate G1, which passes through the non-exclusive OR gate G3 to the second input of the AND gate 40, as at that moment the other input of the OR gate G3 is low. Therefore, switching from antenna 1 to antenna 2 results in a high pulse on the output of the OR gate G3. A similar reasoning can be held for switching from antenna 2 to antenna 3, from antenna 3 to antenna 4, and so on. The output pulses of the antenna switching detection means 42 therewith represent antenna switching actions, while using a minimum number of circuitry.
The person skilled in the art will recognize alternative embodiments within the ambit of the present invention, the scope of which has justfully been determined by the appended Claims hereinafter. For example, the plurality of antennas may comprise an antenna for receiving radio broadcast RF signals as well as an antenna for receiving telecommunication RF signals and/or the use of a fixed antenna disabling period may be dispensed with.

## Claims

1. Antenna diversity receiver comprising antenna selective switching means (10) for selecting and coupling one of a plurality of antennas (2, 4, 6, 8) to an RF receiver input (12), as well as a multipath detector (30) to activate said antenna selective switching means to change over to another antenna at the occurrence of multipath interferences in the RF reception signal of said one antenna and switching disabling (32) means automatically disabling the antenna selective switching means to change antennas over a disabling period following each such change over, **characterised by** an adjacent channel detector (38) controlling said disabling period to increase with increasing adjacent channel interferences and vice versa.

2. Antenna diversity receiver according to claim 1, **characterised by** said adjacent channel detector being coupled to a control terminal of a variable timer circuit defining said disabling period.

3. Antenna diversity receiver according to claim 2, **characterised by** said variable timer circuit comprising a digital counter having a variable counting cycle.

4. Antenna diversity receiver according to one of claims 1 to 3, **characterised by** antenna switching detection means comprising signal level detection means and OR gate means coupled between said plurality of antennas and the switching disabling means.

5. Antenna diversity receiver according to claim 4, **characterised by** said OR gate means comprising per each pair of antennas included in said plurality of antennas an exclusive OR gate, the antennas within each such pair being coupled through said signal level detection means to first and second input terminals of the exclusive OR gate, directly, respectively via a delay element, an output of each exclusive OR gates being coupled to an input of a non-exclusive OR gate, an output thereof being coupled to the switching disabling means.

6. Antenna diversity receiver according to claim 5, **characterised in that** said delay element comprises an RC member having a serial resistor and a mass connected capacitor, the joint connection of the resistor and the capacitor being coupled to the respectively connected to said signal level detection means by respectively, the signal level detection means being coupled to the second input terminal of said exclusive OR gate.

7. Antenna diversity receiver according to one of claims 2 to 6, **characterised by** a threshold circuit being coupled between an output of the adjacent channel detector and a control input of the switching disabling means for comparing the output signal of the adjacent channel detector with a threshold value limiting the control range of the variable timer circuit at a predetermined value.

8. Antenna diversity receiver according to claim 7, **characterised in that** the switching disabling means comprises a fixed timer circuit defining a fixed disabling period corresponding to said predetermined value.

9. Antenna diversity receiver according to claim 7 or 8, **characterised in that** the antenna switching detection means and the threshold circuit are respectively coupled to first and second inputs of an AND gate, an output thereof being coupled to the control terminal of said variable timer circuit.

10. Antenna diversity receiver according to one of claims 1 to 9, **characterised in that** the adjacent channel detector is provided with a multiplex input being respectively coupled to an output of the demodulator for detecting adjacent channel reception at the occurrence of both an amplitude variation in the IF signal level as well as distortion components in the demodulator output signal.

11. Antenna diversity receiver according to one of claims 1 to 10, **characterised by** a variable bandwidth intermediate frequency (IF) selectivity being controlled by the adjacent channel detector to decrease in bandwidth with increasing adjacent channel interferences and vice versa.

12. Antenna diversity receiver according to one of claims 1 to 11, **characterised in that** the plurality of antennas comprises an antenna for receiving radio broadcast RF signals as well as an antenna for receiving telecommunication RF signals.

## Patentansprüche

1. Antennendiversityempfänger, der folgendes umfaßt: antennenselektive Schaltmittel (10) zum Auswählen und Koppeln einer von mehreren Antennen (2, 4, 6, 8) an einen HF-Empfängereingang (12) sowie einen Mehrwegedetektor (30) zum Aktivieren der antennenselektiven Schaltmittel zum Umwechseln auf eine andere Antenne beim Auftreten von Mehrwegeinterferenzen in dem HF-Empfangssignal der einen Antenne und Schaltblockiermittel (32), die das antennenselektive Schaltmittel automatisch blockieren, um Antennen über eine Blockierperiode nach jeder derartigen Umwechslung umzuwechseln, **gekennzeichnet durch** einen Benachbarte-Kanal-Detektor (38), der die Blockierperiode steuert zum Erhöhen mit zunehmenden Interferenzen zwischen benachbarten Kanälen und umgekehrt.

2. Antennendiversityempfänger nach Anspruch 1, **dadurch gekennzeichnet, daß** der Benachbarte-Kanal-Detektor an einen Steueranschluß einer variablen Zeitgeberschaltung gekoppelt ist, die die Blockierperiode definiert.

3. Antennendiversityempfänger nach Anspruch 2, **dadurch gekennzeichnet, daß** die variable Zeitgeberschaltung einen digitalen Zähler mit einem variablen Zählzyklus umfaßt.

4. Antennendiversityempfänger nach einem der Ansprüche 1 bis 3, **gekennzeichnet durch** Antennenschaltdetektionsmittel, die Signalpegeldetektionsmittel und OR-Gattermittel, die zwischen die mehreren Antennen und die Schaltblockiermittel gekoppelt sind, umfassen.

5. Antennendiversityempfänger nach Anspruch 4, **dadurch gekennzeichnet, daß** das OR-Gattermittel pro jedem Paar von Antennen, in den mehreren Antennen enthalten, ein Exclusive-OR-Gatter enthält, wobei die Antennen innerhalb jedes derartigen Paars durch das Signalpegeldetektionsmittel mit ersten und zweiten Eingangsanschlüssen des Exclusive-OR-Gatters direkt gekoppelt ist bzw. über ein Verzögerungselement ein Ausgang jedes Exclusive-OR-Gatters mit einem Eingang eines Nicht-Exclusive-OR-Gatters gekoppelt ist, wobei ein Ausgang davon mit den Schaltblockiermitteln gekoppelt ist.

6. Antennendiversityempfänger nach Anspruch 5, **dadurch gekennzeichnet, daß** das Verzögerungselement ein RC-Glied mit einem Reihenwiderstand und einem an Masse angeschlossenen Kondensator umfaßt, wobei die gemeinsame Verbindung des Widerstands und des Kondensators an den jeweiligen angeschlossenen an die Signalpegeldetektionsmittel gekoppelt ist durch jeweils, wobei die Signalpegeldetektionsmittel an den zweiten Eingangsanschluß des Exclusive-OR-Gatters gekoppelt sind.

7. Antennendiversityempfänger nach einem der Ansprüche 2 bis 6, **dadurch gekennzeichnet, daß** eine Schwellwertschaltung zwischen einen Ausgang des Benachbarte-Kanal-Detektors und einem Steuereingang des Schaltblockiermittels gekoppelt ist zum Vergleichen des Ausgangssignals des Benachbarte-Kanal-Detektors mit einem Schwellwert, wobei der Steuerbereich der variablen Zeitgeberschaltung auf einen vorbestimmten Wert begrenzt wird.

8. Antennendiversityempfänger nach Anspruch 7, **dadurch gekennzeichnet, daß** das Schaltblockierungsmittel eine feste Zeitgeberschaltung umfaßt, die eine feste Blockierungsperiode entsprechend dem vorbestimmten Wert definiert.

9. Antennendiversityempfänger nach Anspruch 7 oder 8, **dadurch gekennzeichnet, daß** die Antennenschaltdetektionsmittel und die Schwellwertschaltung jeweils an erste und zweite Eingänge eines AND-Gatters gekoppelt sind, wobei ein Ausgang davon an den Steueranschluß der variablen Zeitgeberschaltung gekoppelt ist.

10. Antennendiversityempfänger nach einem der Ansprüche 1 bis 9, **dadurch gekennzeichnet, daß** der Benachbarte-Kanal-Detektor mit einen Multiplexeingang versehen ist, der jeweils an einen Ausgang des Demodulators gekoppelt ist zum Detektieren des Empfangs benachbarter Kanäle beim Auftreten sowohl einer Amplitudenvariation in dem ZF-Signalpegel sowie von Verzerrungskomponenten in dem Demodulatorausgangssignal.

11. Antennendiversityempfänger nach einem der Ansprüche 1 bis 10, **dadurch gekennzeichnet, daß** eine eine variable Bandbreite aufweisende Zwischenfrequenz-(ZF)-Selektivität von dem Benachbarte-Kanal-Detektor gesteuert wird zum Verringern der Bandbreite mit zunehmenden Interferenzen zwischen benachbarten Kanälen und umgekehrt.

12. Antennendiversityempfänger nach einem der Ansprüche 1 bis 11, **dadurch gekennzeichnet, daß** die mehreren Antennen eine Antenne zum Empfangen von HF-Funkrundsendesignalen sowie eine Antenne zum Empfangen von HF-Telekommunikationssignalen umfaßen.

## Revendications

1. Récepteur à diversité d'antenne comprenant un moyen de commutation sélective d'antenne (10) pour sélectionner et coupler l'une d'une pluralité d'antennes (2, 4, 6, 8) à une entrée de récepteur RF (12), ainsi qu'un détecteur de trajets multiples (30) pour activer ledit moyen de commutation sélective d'antenne afin d'effectuer une commutation vers une autre antenne à l'occurrence d'un brouillage par trajets multiples dans le signal de réception RF de ladite une antenne et un moyen de désactivation de commutation (32) désactivant automatiquement le moyen de commutation sélective d'antenne pour commuter les antennes sur une période de désactivation faisant suite à chaque telle commutation, **caractérisé par** un détecteur de voie adjacente (38) commandant ladite période de désactivation pour qu'elle augmente avec une augmentation du brouillage par les voies adjacentes et vice versa.

2. Récepteur à diversité d'antenne selon la revendication 1, **caractérisé par** ledit détecteur de voie adjacente couplé à une borne de commande d'un circuit de temporisation variable définissant ladite période de désactivation.

3. Récepteur à diversité d'antenne selon la revendication 2, **caractérisé par** ledit circuit de temporisation variable comprenant un compteur numérique ayant un cycle de comptage variable.

4. Récepteur à diversité d'antenne selon l'une des revendications 1 à 3, **caractérisé par** un moyen de détection de commutation d'antenne comprenant un moyen de détection de niveau de signal et un moyen formant porte OR couplés entre ladite pluralité d'antennes et le moyen de désactivation de commutation.

5. Récepteur à diversité d'antenne selon la revendication 4, **caractérisé par** ledit moyen formant porte OR comprenant, pour chaque paire d'antennes incluses dans ladite pluralité d'antennes, une porte OR exclusif, les antennes dans chaque telle paire étant couplées par l'intermédiaire dudit moyen de détection de niveau de signal aux première et seconde bornes d'entrée de la porte OR exclusif, directement, respectivement par l'intermédiaire d'un élément à retard, une sortie de chaque porte OR exclusif étant couplée à une entrée d'une porte OR non exclusif, sa sortie étant couplée au moyen de désactivation de commutation.

6. Récepteur à diversité d'antenne selon la revendication 5, **caractérisé en ce que** ledit élément à retard comprend un élément RC ayant une résistance en série et un condensateur relié à la masse, la connexion commune de la résistance et du condensateur étant couplée et reliée respectivement audit moyen de détection de niveau de signal, le moyen de détection de niveau de signal étant couplé à la seconde borne d'entrée de ladite porte OR exclusif.

7. Récepteur à diversité d'antenne selon l'une des revendications 2 à 6, **caractérisé par** un circuit de seuil couplé entre une sortie du détecteur de voie adjacente et une entrée de commande du moyen de désactivation de commutation pour comparer le signal de sortie du détecteur de voie adjacente à une valeur de seuil limitant la plage de commande du circuit de temporisation variable à une valeur prédéterminée.

8. Récepteur à diversité d'antenne selon la revendication 7, **caractérisé en ce que** le moyen de désactivation de commutation comprend un circuit de temporisation fixe définissant une période de désactivation fixe correspondant à ladite valeur prédéterminée.

9. Récepteur à diversité d'antenne selon la revendication 7 ou 8, **caractérisé en ce que** le moyen de détection de commutation d'antenne et le circuit de seuil sont couplés respectivement aux première et seconde entrées d'une porte AND, sa sortie étant couplée à la borne de commande dudit circuit de temporisation variable.

10. Récepteur à diversité d'antenne selon l'une des revendications 1 à 9, **caractérisé en ce que** le détecteur de voie adjacente est muni d'une entrée multiplex couplée respectivement à une sortie du démodulateur pour détecter une réception de signal de voie adjacente à l'occurrence à la fois d'une variation d'amplitude du niveau de signal IF et de composantes de distorsion dans le signal de sortie du démodulateur.

11. Récepteur à diversité d'antenne selon l'une des revendications 1 à 10, **caractérisé par** une sélectivité de fréquence intermédiaire (IF) à largeur de bande variable commandée par le détecteur de voie adjacente pour diminuer la largeur de bande avec une augmentation du brouillage par les voies adjacentes et vice versa.

12. Récepteur à diversité d'antenne selon l'une des revendications 1 à 11, **caractérisé en ce que** la pluralité d'antennes comprend une antenne pour recevoir des signaux RF de radiodiffusion ainsi qu'une antenne pour recevoir des signaux RF de télécommunication.
